# EUROPEAN PATENT APPLICATION

(11) **EP 4 640 853 A1**
(43) Date of publication of application: **29.10.2025**
(21) Application number: 23907443.8
(22) Date of filing: 20.11.2023
(51) Int. Cl.: C21D 8/12, C21D 10/00, C21D 9/46, H01F 1/147, H01S 3/00

(54) **GRAIN ORIENTED ELECTRICAL STEEL SHEET AND METHOD FOR REFINING MAGNETIC DOMAINS THEREIN**

(30) Priority: 21.12.2022 KR 20220180988
(71) Applicant: POSCO Co., Ltd, Pohang-si, Gyeongsangbuk-do 37859 (KR)
(72) Inventor: KWON, Ohyeoul, Pohang-si, Gyeongsangbuk-do 37859 (KR); KWON, Ohocheal, Pohang-si, Gyeongsangbuk-do 37859 (KR); KIM, Donggeun, Pohang-si, Gyeongsangbuk-do 37859 (KR); HONG, Soonchang, Pohang-si, Gyeongsangbuk-do 37859 (KR)
(74) Representative: Meissner Bolte Partnerschaft mbB
(86) International application number: PCT/KR2023/018648
(87) International publication number: WO 2024/136157

(57) **Abstract**

A grain-oriented electrical steel sheet according to an embodiment of the present disclosure includes: an electrical steel sheet substrate; and an insulating film layer that is disposed on the electrical steel sheet substrate. A deformation portion with a linear shape exists on a surface of the insulating film layer, an overlapping irradiation boundary portion exists within the deformation portion, a molten solidification layer exists at a lower portion of the overlapping irradiation boundary portion, and the molten solidification layer includes 10% by weight or less of P.

## Description

### [Technical Field]

An embodiment of the present disclosure relates to a grain-oriented electrical steel sheet and a method for refining a magnetic domain therein. More specifically, the embodiment of the present disclosure relates to a grain-oriented electrical steel sheet having an excellent iron loss characteristic while preventing surface damage by irradiating overlapping lasers to a surface of an electrical steel sheet on which secondary recrystallization occurs, and a method for refining a magnetic domain of the grain-oriented electrical steel sheet.

### [Background Art]

A grain-oriented electrical steel sheet has an excellent magnetic characteristic to be generally used as an iron core material of a transformer. In manufacturing of the grain-oriented electrical steel sheet, a Goss texture recrystallized in an orientation of {110} <001> through a unique rolling and annealing process that only a manufacturing process of the electrical steel sheet has is formed throughout the steel sheet.

In order to cope with climate change, the world is strengthening calculation grade of greenhouse gas emission day by day. A factor affecting the calculation grade of the greenhouse gas emission in an iron core of the transformer is related to improvement of efficiency when the electrical steel sheet is used. **In** efficiency of the iron core of the transformer, an iron loss and a magnetic flux density (i.e., magnetic characteristics) of the electrical steel sheet are acting as important factors.

Because the magnetic flux density of the electrical steel sheet is higher as a degree to which a crystal axis that is easy to magnetize is gathered in a crystal structure that is crystal orientation is higher, the manufacturing process of the electrical steel sheet may significantly affect the magnetic flux density.

A W17/50 [W/kg] value measured when a magnetic field having a frequency of 50 **Hz** is applied at a maximum magnetic flux density of 1.7 T is called a guaranteed iron loss value of the iron core material, and the value is generally used as a measure of the iron loss of the electrical steel sheet. However, when the transformer is designed, a W15/50 [W/kg] value measured when a magnetic field with a frequency of 50 Hz is applied at a maximum magnetic flux density of 1.5 T that is lower than the maximum magnetic flux density of 1.7 T is also used. The lower the iron loss value, the better the efficiency of the transformer.

Therefore, the electric steel sheet with a high magnetic flux density and a low iron loss may be used as an iron core of the transformer with an excellent efficiency.

The iron loss is evaluated as a more important indicator because a process technology for securing the high magnetic flux density through upward leveling of the manufacturing process of the electrical steel sheet has been developed to a level that may support an efficiency of the transformer.

The iron loss is divided into an eddy current loss and a hysteresis loss and the hysteresis loss tends to decrease if the magnetic flux density is high, so that the eddy current loss occupies an important position in controlling an overall iron loss in a grain-oriented electrical steel sheet. The eddy current loss among the iron loss is divided into a classical eddy current loss and an anomalous eddy current loss, and the classical eddy current loss is proportional to a thickness of the steel sheet so that the classical eddy current loss is decreased as the steel sheet is thinner. Therefore, controlling the anomalous eddy current loss is becoming an important technology for reducing the iron loss.

The eddy current loss among the iron loss may be reduced as a magnetic wall spacing of a 180° magnetic domain in a rolling direction becomes narrower, so that the iron loss is reduced by refining a magnetic domain of the electrical steel sheet.

Refining the magnetic domain in the electrical steel sheet means a process of separating the magnetic domain into multiple magnetic domains by applying a physical stimulus to a crystal grain with one magnetic characteristic. A method for refining the magnetic domain may include laser irradiation, electron beam irradiation, plasma treatment, etching, roll pressing, or the like. Depending on whether an effect of refinement of the magnetic domain is maintained even after refinement treatment of the magnetic domain is performed and then stress relief annealing (SRA) is performed, refinement of the magnetic domain is divided into refinement of a permanent magnetic domain and refinement of a temporary magnetic domain.

In a series of manufacturing process of the electric steel sheet, a refinement process of the magnetic domain may be performed before a decarbonization process or after insulation coating.

It takes a lot of time for transportation of a product or the like until the electrical steel sheet produced is shipped in a coil form to be processed into a final iron core. During a period of the transportation or during the electrical steel sheet is processed into the iron core, there is a possibility that a portion physically stimulated for the refinement of the magnetic domain in the electrical steel sheet may be corroded.

Occurring corrosion in a portion of a surface of the electrical steel sheet that is physically stimulated means that an insulating film on the surface is peeled off so that a substrate of the electrical steel sheet is exposed. If the electrical steel sheet is stacked and used as the iron core, the insulating film formed on the surface of the electrical steel sheet is destroyed so that upper and lower stacked iron cores become electrically conductive. In this case, there is even a possibility that the transformer may explode.

Therefore, even if a physical stimulus is applied to the surface of the electrical steel sheet to refine the magnetic domain, it is necessary to apply the stimulus within a range that does not damage the insulating film.

### [Disclosure]

### [Technical Problem]

An embodiment of the present disclosure provides a grain-oriented electrical steel sheet and a method for refining a magnetic domain thereof. More specifically, the embodiment of the present disclosure provides a grain-oriented electrical steel sheet having an excellent iron loss characteristic while preventing surface damage by irradiating overlapping lasers having different wavelengths to a surface of an electrical steel sheet on which secondary recrystallization occurs, and a method for refining a magnetic domain of the grain-oriented electrical steel sheet.

### [Technical Solution]

A grain-oriented electrical steel sheet according to an embodiment of the present disclosure includes: an electrical steel sheet substrate; and an insulating film layer that is disposed on the electrical steel sheet substrate. A deformation portion with a linear shape exists on a surface of the insulating film layer, an overlapping irradiation boundary portion exists within the deformation portion, a molten solidification layer exists at a lower portion of the overlapping irradiation boundary portion, and the molten solidification layer includes 10% by weight or less of P.

A width of the deformation portion of the molten solidification layer in a direction perpendicular to a length direction of the deformation portion may be 0.05 to 10 µm.

A thickness of the molten solidification layer may be 20% or less of a thickness of the insulating film layer.

The insulating film layer below the deformation portion excluding the overlapping irradiation boundary portion may have a content of P of 10 to 20 wt% in a range of 100 nm in a thickness direction of the steel sheet from a surface of the insulating film layer.

A thickness of the insulating film layer below the deformation portion may be 60 to 90% of a thickness of the insulating film layer where the deformed portion is not formed.

A metal oxide layer may be interposed between the electrical steel sheet substrate and the insulating film layer.

A method for refining a magnetic domain of a grain-oriented electrical steel sheet according to an embodiment of the present disclosure includes: irradiating a first laser beam having a first wavelength; and irradiating a second laser beam having a second wavelength. A first beam spot of the first laser beam and a second beam spot of the second laser beam overlap by 10% or more.

Each of the first laser beam and the second laser beam may be selected from a CO₂ laser, an optical fiber laser, a YAG laser, a ruby laser, a sapphire laser, a disk laser, a diode laser, or a UV laser.

An output of each of the first laser beam and the second laser beam may be 10 to 2000 W.

The first laser beam and the second laser beam may have different wavelengths.

An interval between a time at which the first laser beam is irradiated and a time at which the second laser beam is irradiated may be 16 ms or less at a position in which the first beam spot of the first laser beam and the second beam spot of the second laser beam overlap.

### [Advantageous Effects]

An embodiment of the present disclosure may perform optimal refinement of a magnetic domain to further improve magnetism while at the same time sufficiently suppressing damage to a surface of a steel sheet.

An embodiment of the present disclosure may easily increase an average output using a long-wavelength laser, may secure reliability of a processing line, and at the same time may irradiate a short-wavelength laser together to form the magnetic domain to a minimum so that it effectively improves magnetism.

An embodiment of the present disclosure may suppress magnetic deviation due to a film while maintaining an improvement effect of an iron loss by overlapping lasers.

An embodiment of the present disclosure may stably preheat the steel sheet without destroying insulating film layers, and may induce a residual stress due to thermoelastic deformation of the steel sheet with a width exactly as necessary for forming a reflux magnetic domain without considering a thickness of the insulating film layer to enable precise refinement of the magnetic domain.

An embodiment of the present disclosure may maximize thermal shock in a thickness direction even under a low laser output condition to provide a directional magnetic domain refinement product having an excellent iron loss under low and high magnetic fields.

### [Description of the Drawings]

FIG. 1 is a graph showing a light absorption rate of a steel sheet according to a wavelength of a laser.
FIG. 2 is a schematic diagram illustrating a concept of refinement of a magnetic domain forming a deformation portion using overlapping lasers according to an embodiment of the present disclosure.
FIG. 3 is a schematic diagram showing a beam spot of the overlapping lasers according to an embodiment of the present disclosure.
FIG. 4 is a schematic diagram showing a beam spot of the overlapping lasers according to another embodiment of the present disclosure.

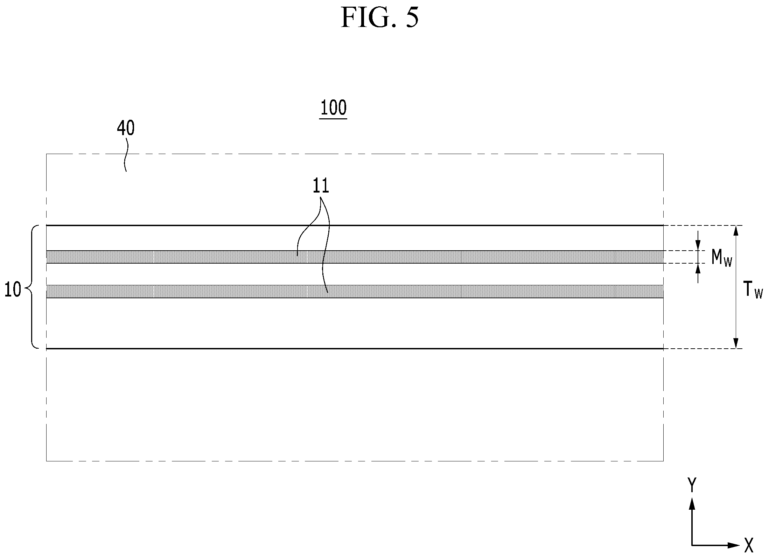

FIG. 5 is a schematic diagram showing a surface of the steel sheet in which a deformed portion and an overlapping irradiation boundary portion are present in an embodiment of the present disclosure.

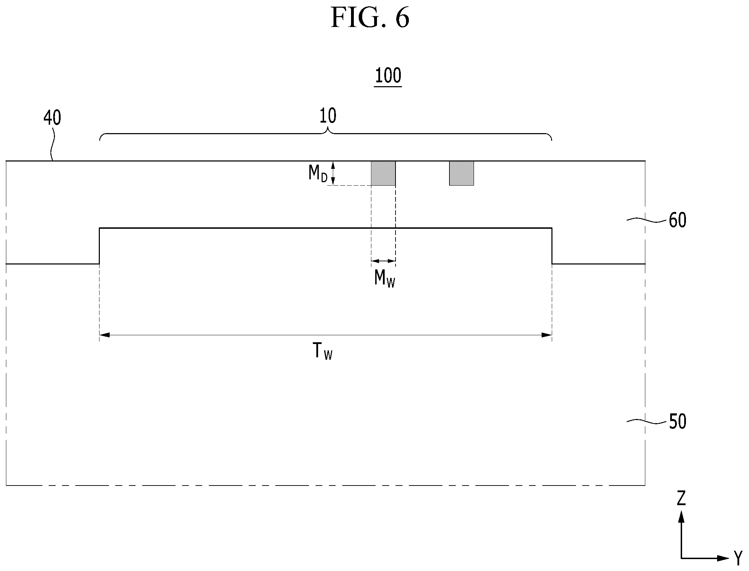

FIG. 6 is a schematic diagram showing a cross-section in a thickness direction (e.g., a Z direction) of the steel sheet in which the deformation portion and the overlapping irradiation boundary portion are present in an embodiment of the present disclosure.
FIG. 7 is a photograph of a molten solidification layer analyzed using a focused ion beam (FIB)-transmission electron microscopy (TEM) in Embodiment 1.
FIG. 8 is a graph showing elemental analysis of the molten solidification layer of FIG. 7 in a thickness direction.

### [Mode for Invention]

Terms such as "first", "second", and "third" are used herein to describe various portions, components, regions, layers, and/or sections, but are not limited thereto. The terms are used only to distinguish one portion, component, region, layer, or section from another portion, component, region, layer, or section. Accordingly, a first portion, component, region, layer, or section described below may be referred to as a second portion, component, region, layer, or section within a scope that does not depart from a scope of the present disclosure.

A technical term used herein is intended only to refer to a specific embodiment, and is not intended to limit the present disclosure. Singular forms used herein also include plural forms unless phrases clearly indicate an opposite meaning. A term "include" used in the specification specifies a specific characteristic, region, integer, step, operation, element, and/or component, and does not exclude presence or addition of another characteristic, region, integer, step, operation, element, and/or component.

When it is said that a portion is "on" or "above" another portion, the portion may be disposed directly on or above the other portion, or another portion may be interposed therebetween. In contrast, when a portion is said to be "directly above" another portion, no other portion is interposed therebetween.

Although not otherwise defined, all terms used herein, including a technical term and a scientific term, have the same meanings as those generally understood by a person of ordinary skill in the art to which the present disclosure belongs. Terms defined in a dictionary commonly used are additionally interpreted to have a meaning consistent with the relevant technical literature and the presently disclosed contents, and are not interpreted in an ideal or very formal sense unless otherwise defined.

Hereinafter, an embodiment of the present disclosure will be described in detail so that a person of ordinary skill in the art to which the present disclosure belongs may easily implement the present disclosure. **The** present disclosure may be modified in various ways, all without departing from the spirit or scope of the present disclosure.

**The** embodiment of the present disclosure may provide an excellent iron loss characteristic while preventing surface damage by irradiating overlapping lasers to a surface of an electrical steel sheet.

**The** embodiment of the present disclosure may include a first irradiation step of irradiating a first laser beam having a first wavelength; and a second irradiation step of irradiating a second laser beam having a second wavelength. A first beam spot of the first laser beam and a second beam spot of the second laser beam may overlap by 10% or more.

A method for refining a magnetic domain using a laser is preferred as one of methods for improving an iron loss in a grain-oriented electrical steel sheet.

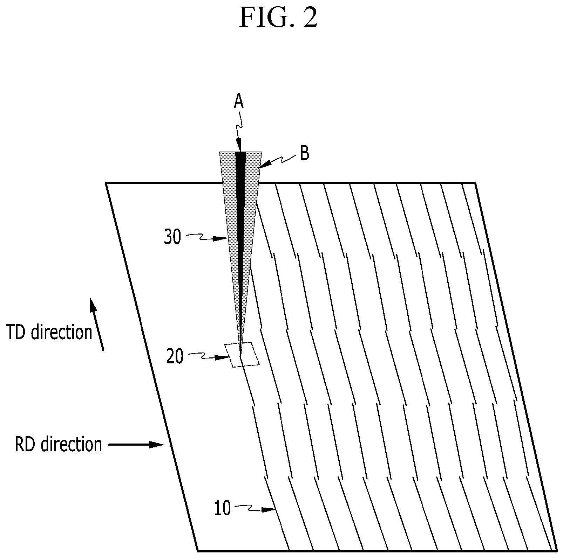

As illustrated in FIG. 2, a process of refining the magnetic domain of the grain-oriented electrical steel sheet may form a deformation portion 10 having a linear shape by irradiating a laser in a direction intersecting a rolling direction (e.g., an RD direction). The deformation portion having the linear shape may form a point-like or continuous linear deformation portion. The deformation portion having the linear shape may include not only a solid line but also an intermittent connection such as a dotted line or a broken line, and may include all deformation portions that form a substantially linear shape including a microscopically zigzag shape but a macroscopically straight-line shape.

Formation of the deformation portion in the steel sheet by the laser may mean deformation of a crystal lattice caused by thermal shock by irradiation of the laser, and the deformation of the crystal lattice may be formed during the process of rapidly heating and immediately cooling the steel sheet locally by the laser. In this case, a heating speed of the steel sheet may be proportional to an energy density (e.g., a power density) per unit time of the laser.

However, because the deformation of the crystal lattice due to the thermal shock during the irradiation of the laser is increased as a total irradiation energy of the laser is increased, more heat sources than necessary for forming a reflux magnetic domain may diffuse to the surroundings so that magnetic deformation is increased if an energy greater than or equal to a size required for refinement of the magnetic domain is irradiated to the steel sheet. Therefore, the deformation of the crystal lattice due to the thermal shock during the irradiation of the laser may require only a lattice deformation energy exactly as necessary for forming the reflux magnetic domain, and it is desirable to irradiate an incident energy of the laser to a narrow area for a shorter time to suppress the heat diffusion.

An interaction condition between a beam of the laser and the steel sheet may be affected by a characteristic of the laser and an absorption rate of the beam of the laser for the steel sheet. The absorption rate of the beam of the laser may be affected by a surface roughness of the steel sheet, a temperature of the steel sheet, an absorption characteristic of a film on a surface of the steel sheet, and a wavelength of the laser. However, when a manufacturing condition of the grain-oriented electrical steel sheet forming the film is constant, the surface roughness of the steel sheet, the temperature of the steel sheet, and the absorption characteristic of the film on the surface of the steel sheet may be constant, and in this case, an absorption rate of the steel sheet of the laser beam may depend on the wavelength of the laser.

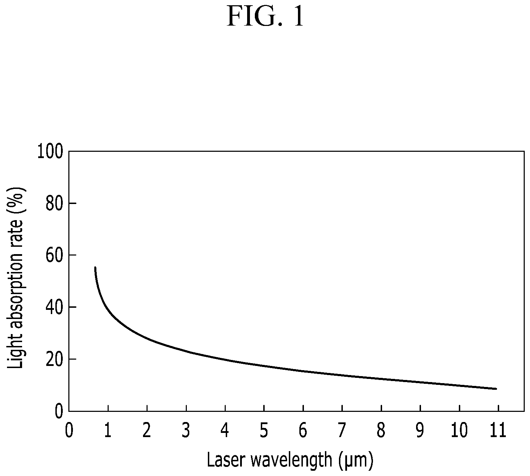

That is, when the manufacturing condition of the steel sheet is constant, the absorption rate of the laser may be affected by the wavelength of the laser. As shown in FIG. 1, the absorption rate of the laser of the steel sheet may be approximately 35 to 40% if the wavelength is a short wavelength (e.g., 1.06 µm for a YAG or fiber laser), while the absorption rate of the laser of the steel sheet is relatively low at approximately 5 to 10% if the wavelength is a long wavelength (e.g., 10.6 µm for a CO₂ laser).

It may be more efficient to use a short-wavelength laser than to use a long-wavelength laser to secure a stable iron loss characteristic in a process of refining the magnetic domain of the grain-oriented electrical steel sheet using the laser.

An insulating film including phosphate and silica with a thickness of several to several tens of µm as primary components may be formed on a surface of the electric steel sheet that is a treatment object of refinement of the magnetic domain. The film may have relatively little absorption of the laser beam for the short-wavelength laser (e.g., a YAG or fiber laser with 1.06 µm), but may have relatively great absorption of the laser beam for the long-wavelength laser (e.g., a CO₂ laser with 10.6 µm). As a result, a thickness of the insulating film should be considered in the long-wavelength laser, but the thickness of the insulating film may be less considered in the short-wavelength laser than in the long-wavelength laser.

As described above, the short-wavelength laser and the long-wavelength laser may have different characteristics. Therefore, if the short-wavelength laser and the long-wavelength laser are simultaneously and overlappingly used, an advantage of each laser applied to the refinement of the magnetic domain may be preferentially exerted without a side effect so that a mutual synergistic effect is induced.

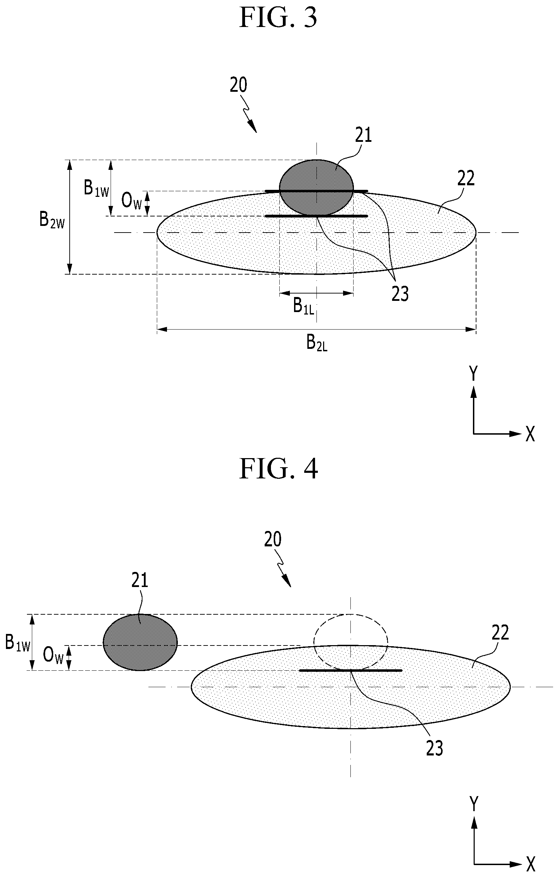

The use of overlapping the lasers may mean that two or more lasers are used for the laser beam irradiated on a surface of the steel sheet and some or all of a spot of one laser beam formed on the surface of the steel sheet are disposed within a spot of the other laser beam. Therefore, in an embodiment of the present disclosure, the overlapping lasers having different wavelengths include not only those in which the spot of one laser beam is completely covered and overlapped with the spot of the other laser beam but also those in which the spot of one laser beam is partially overlapped with the spot of the other laser beam. An irradiation time of the laser beam with respect to an overlapping position does not need to be simultaneously performed, and the laser beams may be overlappingly irradiated at a predetermined time interval. That is, even if the laser beams do not overlap at a specific time point as shown in FIG. 4, the laser beams may be considered to overlap when a first laser beam horizontally moves in a progress direction (e.g., an X direction) over time to overlap a second laser beam previously irradiated at a position of the second laser beam. However, overlapping first laser beams in a process of the first laser beam progressing in an irradiation progress direction (e.g., the X direction) is not considered as overlapping the laser beams.

In an embodiment of the present disclosure, the beam spot may mean a beam spot on a surface 40 of the steel sheet. FIG. 3 schematically shows a first beam spot of a first laser beam 21 and a second beam spot of a second laser beam 22.

The first beam spot of the first laser beam and the second beam spot of the second laser beam may overlap by 10% or more. The 10% or more may refer to a ratio of a width Ow of an overlapping area to a width of the laser beam smaller among a width B_{1W} of the first laser beam and a width B_{2W} of the second laser beam. In FIG. 3, the width B_{1W} of the first laser beam may be small, and in this case, the overlapping ratio may be calculated as O_{W}/B_{1W}.

The width of the laser beam may be a length of the laser beam in a direction (e.g., a Y direction) perpendicular to a length direction of the deformation portion (or a laser irradiation progress direction (e.g., the X direction)). The length of the laser beam may be a length of the laser beam in a length direction of the deformation portion (or the laser irradiation progress direction (e.g., the X direction)). In FIG. 3, a length B_{1L} of the first laser beam and a length B_{2L} of the second laser beam are indicated.

If the laser beams do not overlap at the specific time point as shown in FIG. 4, the overlapping ratio may be considered when the first laser beam horizontally moves in the progress direction (e.g., the X direction) so that the width Ow of the overlapping area becomes the longest.

In an embodiment of the present disclosure, because the overlapping area exists, an overlapping irradiation boundary portion 23 may exist at both end portions in the direction (e.g., the Y direction) perpendicular to the length direction of the deformation portion (or the laser irradiation progress direction (e.g., the X direction)). A molten solidification layer 11 may exist at a lower portion of the overlapping irradiation boundary portion 23. The molten solidification layer 11 will be described later in relation to the grain-oriented electrical steel sheet.

Each of a first laser and a second laser may be selected from a CO₂ laser, an optical fiber laser, a YAG laser, a ruby laser, a sapphire laser, a disk laser, a diode laser, or a UV laser.

For example, a first laser A that is the short-wavelength laser may use a laser with a relatively short wavelength, and for example, the first laser A may be the optical fiber laser (e.g., an Er-fiber laser, a Yb-fiber laser, or a Tm-fiber laser), the YAG laser (e.g. an Nd:YAG laser or a Yb:YAG laser), the ruby laser, the sapphire laser, or the like. In addition, the disk laser with 1.03 µm, the diode laser with 0.808 to 0.980 µm, or the UV laser with 0.150 to 0.355 µm may be used as the first laser.

A laser with a relatively longer wavelength than a short wavelength may be used as the second laser that is the long-wavelength laser. For example, the CO₂ laser may be the second laser. However, if the UV laser with 0.150 to 0.355 µm is used as the first laser that is the short-wavelength laser, any laser with a longer wavelength than that of the first laser may be used as the second laser. For example, if the UV laser with 0.150 to 0.355 µm is used as the first laser, the YAG laser may be used as the second laser.

Hereinafter, a method for refining the magnetic domain using overlapping lasers 30 will be described in more detail when the optical fiber laser is used as the first laser with the short wavelength and the CO₂ laser is used as the second laser with the long wavelength.

Because the optical fiber laser that is the first laser uses a laser wavelength of the short wavelength with a relatively high laser absorption rate for the steel sheet, it is possible to irradiate an incident energy that causes a residual stress due to lattice deformation and thermoelastic deformation exactly as necessary for forming the reflux magnetic domain to a narrow area for a shorter time. Additionally, because the optical fiber laser used as the first laser has a narrow range of the incident energy, the optical fiber laser may suppress heat diffusion to the surroundings to minimize unnecessary thermal deformation.

The CO₂ laser that is the second laser may use an average output of a high output of several hundred watts to several kilowatts or more depending on a speed of the steel sheet, and may easily induce thermoelastic deformation in an irradiated portion of the steel sheet. In addition, the CO₂ laser that is the second laser may have a high absorption rate for an insulating film made of phosphate and silica to stably pass through film layers. Therefore, the CO₂ laser that is the second laser may stably induce thermoelastic deformation of the steel sheet without destroying insulating film layers, so that it is suitable for serving as a kind of preheating. However, because the CO₂ laser that is the second laser B has a low laser absorption rate for the steel sheet, the laser that induces thermoelastic deformation of the steel sheet but does not cause permanent deformation of the steel sheet may be irradiated.

That is, if the long-wavelength laser such as the CO₂ laser that is the second laser is used, a portion that provides thermal shock to the steel sheet may be too wide so that refinement of the magnetic domain does not occur well. Therefore, the optical fiber laser with a relatively short wavelength may be used as the first laser to be used as a main laser for the refinement of the magnetic domain, and the CO₂ laser with a relatively long wavelength may be used as an auxiliary laser that plays a kind of preheating role to induce thermoelastic deformation of the steel sheet.

A reason why the optical fiber laser with a short wavelength is selected as the first laser to be used as the main laser for the refinement of the magnetic domain may be that a laser absorption rate on a surface of the steel sheet is high so that a strong compression stress portion is formed in a laser irradiation portion and a lancet magnetic domain (e.g., the reflux magnetic domain) is easily formed to reduce magnetoelastic energy in the compression stress portion.

In this case, a 180° magnetic domain (e.g., an opposite magnetic pole of the lancet magnetic domain) may be formed in a surface direction by magnetoelastic energy due to the refinement of the magnetic domain, and a 90° magnetic domain may be formed in a sheet thickness direction to reduce the magnetoelastic energy. Thus, an interval between magnetic domains may be narrowed so that an abnormal eddy current loss is ultimately reduced.

As described above, a method for refining the magnetic domain according to an embodiment of the present disclosure may use the optical fiber laser with the short wavelength that is the first laser to induce a residual stress due to thermoelastic deformation of the steel sheet with a width exactly as necessary for forming the reflux magnetic domain so that it enables precise refinement of the magnetic domain. In addition, the method may use the CO₂ laser with the long wavelength that is the second laser to stably preheat the steel sheet without destroying film layers.

In addition, the optical fiber laser with the short wavelength that is the first laser may have an advantage of being able to form a small final beam width and improving a laser absorption rate within the steel sheet, but may have a relatively short depth of field. However, the CO₂ laser with the long wavelength that is the second laser may have a wide final beam width and a relatively low laser absorption within the steel sheet, but may have an advantage of having a deep depth of field. Therefore, if the two laser beams are simultaneously overlapped to be irradiated, the laser absorption rate within the steel sheet may be further increased.

In this case, a beam spot of the optical fiber laser with the short wavelength that is the first laser irradiated on a surface of the steel sheet may have a shape close to a circular shape, and diameters B_{W1} and B_{L1} thereof may be 10 to 200 µm. The width Bw₁ of the beam spot of the optical fiber laser may be 10 to 200 µm and the length B_{L1} of the beam spot may be less than or equal to or greater than or equal to a beam spot of the CO₂ laser that is the second laser.

If a beam width B_{W1} of the optical fiber laser that is the first laser is reduced to less than 10 µm, deterioration of a magnetic flux density and iron loss deterioration may appear because an energy density is accumulated in a narrow area, and there may be a problem in which an optical system structure is complicated. If the beam width B_{W1} of the optical fiber laser that is the first laser is increased to 200 µm or more, a thermal effect in a length direction of the steel sheet may be increased so that the magnetic flux density is decreased.

The beam spot of the CO₂ laser with the long wavelength that is the second laser irradiated on the surface of the steel sheet may have an elliptical shape in which a beam width B_{2W} thereof is 100 to 400 µm and a beam length B_{2L} thereof is 0.4 to 20 mm. The beam spot of the CO₂ laser with the long wavelength may have a circular shape in which a radius thereof is 100 µm or more.

In order to form the beam width B_{2W} of the CO₂ laser that is the second laser within 100 µm, a mirror optical system such as the CO₂ laser may become complicated, and if the beam width B_{2W} of the CO₂ laser is increased to 400 µm or more, a thermal effect in a length direction of the steel sheet may be increased so that the magnetic flux density is decreased.

A reason why a size of the beam spot of the CO₂ laser with the long wavelength that is the second laser is limited may be that a range in which a thermal deformation effect of the laser beam acting on the steel sheet is maintained when the laser is scanned at a high speed on a surface of the steel sheet moving at a high speed is considered.

A case in which lasers are used in an overlapping manner according to an embodiment of the present disclosure will be described in more detail.

Using the first laser beam 21 and the second laser beam 22 in the overlapping manner as shown in FIG. 3 and FIG. 4 may mean that the beam spot of the first laser beam 21 and the beam spot of the second laser beam 22 are controlled to overlap. That is, that the beams are overlapped may mean that the first laser beam 21 is completely disposed anywhere within a range of the second laser beam 22 having a large beam spot in a plan view of laser beam spots 20 irradiated on the surface of the steel sheet of FIG. 3 and the first laser beam 21 is partially disposed within the range of the second laser beam 22 in the plan view of the laser beam spots 20 irradiated on the surface of the steel sheet of FIG. 3. Furthermore, even if the laser beams do not overlap at a specific time point as shown in FIG. 4, the laser beams may be considered to overlap when the first laser beam 21 horizontally moves in the progress direction (e.g., the X direction) over time to overlap the second laser beam 22 previously irradiated at a position of the second laser beam.

In an oscillation mode of the laser beam used in an embodiment of the present disclosure, both the first laser and the second laser may be a continuous wave laser that continuously generates laser light but may be a pulse laser.

In a quality of the laser beam, both the first laser and the second laser may use a Gaussian mode of TEM 00 or a multi-transverse mode of TEM0i.

However, because overlapping laser beams 20 with different wavelengths irradiated on the surface of the steel sheet according to an embodiment of the present disclosure may maximize thermal shock in a thickness direction while minimizing a thermal influence in a length direction of the steel sheet, a beam shape or a beam quality of each laser may not be specifically limited.

An output of each of the first laser and the second laser may be 10 to 2000 W. For example, the output of the first laser may be 1000 to 2000 W, and the output of the second laser may be 100 to 700 W. An output range of each laser may indicate an output condition of the laser when the steel sheet is progressed at a speed of 15 mpm, and an output value of the laser may be optimally controlled according to a progressing speed of the steel sheet.

An interval when laser beams 30 in which the first laser and the second laser overlap are irradiated on the surface of the steel sheet (i.e., an interval between deformation portions in a rolling direction of the steel sheet) may be 2 to 10 mm, an angle between the rolling direction and a progress direction of the laser (or a length direction of the deformation portion (e.g., the X direction)) may be 75 to 105°, and a scanning speed may be 0.1 to 300 m/sec.

In this case, the electrical steel sheet on which secondary recrystallization occurs may be used.

If an irradiation interval of the overlapping laser beams 20 irradiated on the surface of the steel sheet is too narrow to be less than 2 mm, an influence of a heat-affected portion may be increased so that the magnetic flux density and the iron loss become inferior, and if the irradiation interval is 10 mm or more, a heat shock effect for securing a refinement effect of the magnetic domain may be decreased so that it is difficult to achieve the effect.

When the overlapping laser beams 20 are irradiated on the surface of the steel sheet, the overlapping laser beams may be irradiated in a direction perpendicular or inclined to a rolling direction of the steel sheet, and an angle between the rolling direction and a progress direction of the laser (or a length direction of the deformation portion (e.g., the X direction)) may be 75 to 105°. If the angle is out of the angle range, an effect of refinement of the magnetic domain may not appear.

Because a scanning speed of the overlapping lasers should be faster than a progress speed of the steel sheet, the scanning speed may be 0.1 to 300 m/sec, and the speed may mean a value exemplified under a condition of 15 mpm.

As shown in FIG. 3, the first laser beam and the second laser beam may be simultaneously overlapped to be irradiated, but as shown in FIG. 4, the first laser beam and the second laser beam may be overlapped to be irradiated at a time interval. However, an interval between a time at which the first laser beam is irradiated and a time at which the second laser beam is irradiated may be 16 ms or less at the overlapping position. If the interval exceeds the time range, it may be difficult to sufficiently obtain an effect of overlapping and irradiating the lasers. The interval may refer to a time from when the second laser (or the first laser) is irradiated until the first laser (or the second laser) progresses so that the width Ow of the overlapping area becomes maximum.

In an embodiment of the present disclosure, a grain-oriented electrical steel sheet 100 may include an electrical steel sheet substrate 50 and an insulating film layer 60 disposed on the electrical steel sheet substrate 50, the deformation portion 10 with the linear shape may exist on a surface of the insulating film layer 60, and the overlapping irradiation boundary portion 23 may exist within the deformation portion 10.

As shown in FIG. 3, the overlapping irradiation boundary portion 23 may mean both end portions of the overlapping area in the Y direction when the first laser beam 21 and the second laser beam 22 are overlapped to be irradiated. It may be difficult to determine the overlapping irradiation boundary portion 23 with the naked eye, and it may be determined by whether the molten solidification layer 11 is formed within a lower insulating film layer 10. That is, the molten solidification layer 11 may be formed below the overlapping irradiation boundary portion 23 in the Y direction starting from the overlapping irradiation boundary portion 23. Because the molten solidification layer 11 is formed by volatilization of phosphorus (P) within the insulating film layer 10, there may be little phosphorus within the molten solidification layer 11. That is, if a content of P is 10 wt% or less, it may be determined that the molten solidification layer 11 has been formed. For example, if the content of P is 8 wt% or less, it may be determined that the molten solidification layer 11 has been formed.

A reason why the molten solidification layer 11 is generated when the overlapping laser beams are irradiated may be that phosphorus is first vaporized and silicon oxides including Si and O are re-solidified into an amorphous state because a vaporization point of phosphate constituting the insulating film layer 60 is low. When a re-solidified layer in an amorphous state is formed on a surface of the insulating film layer, a corrosion characteristic may be improved due to an amorphous intrinsic characteristic.

A width Mw of the deformation portion of the molten solidification layer in the direction (e.g., the Y direction) perpendicular to the length direction of the deformation portion may be 0.05 to 10 µm. When the width Mw is in the above-described range, an effect of improving an iron loss and improving corrosion resistance by the overlapping irradiation may be appropriately exerted. For example, the width Mw of the deformation portion of the molten solidification layer in the direction (e.g., the Y direction) perpendicular to the length direction of the deformation portion may be 0.1 to 5 µm.

A thickness M_{D} of the molten solidification layer may be 20% or less of a thickness of the insulating film layer. If the thickness M_{D} of the molten solidification layer is too thick, an absolute thickness of the insulating film layer may become thin so that the corrosion resistance is disadvantageous, and the iron loss may be inferior by reducing a tension effect of the insulating film layer so that the range is limited. For example, the thickness M_{D} of the molten solidification layer may be 1 to 15% of the thickness of the insulating film layer. The thickness M_{D} of the molten solidification layer may mean a depth from a surface of the insulating film to a boundary where P becomes 10%. When the molten solidification layer is formed within 20% or less of the thickness of the insulating film layer 60, a sufficient laser compared with an incident energy of the laser may be applied to the steel sheet without greater damage to the insulating film layer. For example, the thickness M_{D} of the molten solidification layer may be 50 to 500 nm.

The insulating film layer 60 below the deformation portion 10 excluding the overlapping irradiation boundary portion 23 may have a content of P of 10 to 30 wt% in a range of 100 nm in a thickness direction of the steel sheet from a surface thereof. As described above, an energy of the laser may be sufficiently large within the deformation portion 10 and the overlapping irradiation area, so that vaporization of the insulating film layer 60 itself occurs rather than melting and only phosphorus (P) is not selectively volatilized. For example, the content of P may be 12 to 25 wt%.

The deformation portion 10 may not be distinguished from the surface of the insulating film layer other than the deformation portion with the naked eye, and may be distinguished through a thickness of the insulating film layer 60 below the deformation portion 10. That is, when the first laser or the second laser is irradiated, a thickness of a lower portion of the irradiated surface of the insulating film layer may be reduced compared with a thickness of a portion that is not irradiated of the insulating film layer. When the deformation portion 10 is formed in the electrical steel sheet and the molten solidification layer 11 is formed in the insulating film layer 60 by irradiation of the overlapping lasers, shrinkage may occur in the insulating film layer 60 due to formation of the molten solidification layer 11 so that the thickness of the insulating film layer 60 where the deformation portion of the steel sheet is formed is changed.

For example, the thickness of the insulating film layer 60 below the deformation portion 10 may be 60 to 90% of a thickness of the insulating film layer where the deformed portion is not formed. If a thickness of a film layer of the deformation portion formed at the steel sheet is too thin, an iron loss may be degraded due to corrosion resistance degradation and a tension reduction effect caused by a decrease in the film thickness. If the thickness of the film layer of the deformation portion formed at the steel sheet is too thick, the molten solidification layer 11 may not be properly formed, and it may be difficult to expect proper improvement in the iron loss. The thickness of the insulating film layer 60 may mean a depth from a surface of the insulating film layer 60 to a boundary portion where a content of P is 5 wt% when the content of P is increased to 10 wt% or more and then is decreased to 5 wt% or less.

In the grain-oriented electrical steel sheet, a metal oxide layer (e.g., a glass film layer) that is not shown in the drawings may be further formed between the electrical steel sheet substrate and the insulating film layer.

The metal oxide layer may include forsterite as a primary component, and the insulating film layer may include phosphate and colloidal silica as primary components. In the present disclosure, the primary component may mean that the forsterite includes 0.7 g/m² or more as a one surface coating amount of oxygen of a surface of the steel sheet, the phosphate of the insulating film includes 0.1 g/m² or more based on a one surface coating amount of the surface of the steel plate surface, and the colloidal silica of the insulating film includes 0.1 g/m² or more based on a one surface coating amount of the surface of the steel plate surface.

In an embodiment of the present disclosure, in order to secure insulation between steel sheets after refinement of the magnetic domain by thermal deformation using the overlapping laser beams, the insulating film may be prevented from peeling, and a glass film may be prevented from peeling.

When the deformation portion is formed by irradiating the overlapping lasers on a surface of the electrical steel sheet according to an embodiment of the present disclosure, a W15/50 iron loss improvement rate of the steel sheet may be 6% or more. If the W15/50 iron loss improvement rate is lower than 6%, it may be difficult to expect a desired iron loss reduction effect because a laser absorption rate of the steel sheet is low.

When the deformation portion is formed by irradiating the overlapping lasers on the surface of the electrical steel sheet according to an embodiment of the present disclosure, a W17/50 iron loss improvement rate of the steel sheet may be 9% or more. If the W17/50 iron loss improvement rate is lower than 9%, it may be difficult to expect a desired iron loss reduction effect because a laser absorption rate of the steel sheet is low.

Hereinafter, a method for manufacturing the grain-oriented electrical steel sheet according to an embodiment of the present disclosure will be described in detail.

### [Manufacturing of cold-rolled steel sheet]

To manufacture the grain-oriented electrical steel sheet, first, a slab of the electrical steel sheet substrate may be manufactured.

If a magnetization easy axis is aligned in a predetermined direction so that a slab functions as the electrical steel sheet, a chemical composition and a metal structure of the slab are not separately limited. For example, the chemical composition of the slab is as follows:
The slab may include, in wt%, C: 0.08% or less (excluding 0%), Si: 1.0 to 6.5%, Mn: 0.005 to 3.0%, at least one of Nb, V, and Ti: 0.070% or less, at least one of Cr, Sn, and Sb: 2.5% or less, Al: 2.0% or less (excluding 0%), at least one of P and S: 0.100% or less (excluding 0%), Cu and Sn: 1.0% or less, a total of a rare earth element and another impurity: 0.2% or less, and may include the balance (or the remainder) of Fe.

### (C: 0.08% or less (excluding 0%))

Carbon (C) may be an element that is inevitably mixed into steel, but carbon (C) may be controlled to an appropriate content because it deteriorates a magnetic characteristic due to magnetic aging. If a content of C within the steel sheet is too low, phase transformation may not occur sufficiently during a manufacturing process thereof. Thus, a microstructure of the steel sheet may be made non-uniform so that a secondary recrystallization structure becomes unstable. If the content of C within the steel sheet is too high, carbide may become coarse and an amount of precipitation thereof may be excessive during the manufacturing process. Thus, a degree of integration of a Goss texture may be reduced due to insufficient decarbonization so that a secondary recrystallization texture is damaged. Therefore, the content of C of the steel sheet may be 0.08% or less or 0.001 to 0.040%.

### (Si: 1.0 to 6.5%)

Silicon (Si) may be a basic composition of the grain-oriented electrical steel, and may play a role in increasing resistivity of the steel sheet to reduce an iron loss. If a content of Si is less than 1.0%, the resistivity may be decreased so that an eddy current loss is increased. Thus, an iron loss characteristic may be deteriorated so that an effect of Si addition is not expected. If the content of Si is 6.5% or more, brittleness of the steel sheet may be increased and toughness of the steel sheet may be decreased so that breakage of the sheet occurs during a rolling process, and nitride may not be sufficiently formed during the manufacturing process so that sufficient grain inhibition necessary for secondary recrystallization is not secured in a final high-temperature annealing process. Therefore, the content of Si may be 1.0 to 6.5%.

### (Mn: 0.005 to 3.0%)

Manganese (Mn) may have an effect of reducing a total iron loss by increasing resistivity to reduce an eddy current loss, and manganese (Mn) may be an important element that reacts with S in a fired steel state to form Mn-based sulfide and reacts with nitrogen introduced by nitriding with Si to form a precipitate of (Al, Si, Mn) N so that it inhibits growth of a primary recrystallized grain to cause secondary recrystallization and affects surface quality of a final product. If too little Mn is included, the surface quality of the final product may be deteriorated. If too much Mn is included, an austenite phase fraction may be very increased so that the Goss texture is damaged, a magnetic flux density may be reduced, and an oxide layer may be formed too excessively during decarbonization annealing so that decarbonization is hindered. Therefore, a content of Mn may be 0.005 to 3.0%.

### (at least one of Nb, V, and Ti: 0.05% or less)

Niobium (Nb), vanadium (V), and titanium (Ti) may be elements that react with C and N during the manufacturing process to form a precipitate. If too much at least one of Nb, V, and Ti is added, the at least one of Nb, V, and Ti may remain in the steel sheet even after secondary recrystallization annealing so that a magnetic characteristic of the steel sheet is reduced. Therefore, at least one element selected from Nb, V, and Ti may be controlled so that a content of the at least one element is 0.05% or less.

### (at least one of Cr, Sn, and Sb: 2.5% or less)

Chromium (Cr) may be added for a purpose of reducing an iron loss by promoting formation of the Goss texture, and Sn may be added for a purpose of suppressing grain growth to ultimately improve a magnetic flux density. Antimony (Sb) may have an effect of inhibiting growth of a grain to stabilize secondary recrystallization by segregating at a grain boundary. Because all of the three elements that are Cr, Sn, and Sb are correlated with formation of a secondary recrystallized structure, a total of Sn, Sb, and Cr may be controlled so that a content of the total of Sn, Sb, and Cr is 2.5% or less.

### (Al: 2.0% or less (excluding 0%))

In addition to Al-based nitride precipitated during the manufacturing process, aluminum (Al) may be coupled with N introduced by nitriding treatment during a primary recrystallization process and Al, Si, and Mn present in a solid solution state in steel to form (Al, Si, Mn)N and AIN-type nitride, so that aluminum (Al) serves as a strong grain growth inhibitor. If too much Al is included, a precipitate may become non-uniform so that formation of secondary recrystallization becomes unstable. Thus, a magnetic characteristic of the steel sheet may be reduced so that Al is added in an amount of 2.0% or less.

### (at least one of P and S: 0.1% or less (excluding 0%))

Phosphorus (P) may be segregated at a grain boundary to hinder a movement of the grain boundary and simultaneously serve as an auxiliary role inhibiting growth of a grain, and if too much S is added, S may make formation of secondary recrystallization unstable. P and S may be elements that are inevitably added during a process of manufacturing the electrical steel sheet, and may be controlled so that a content of P and S is 0.1% or less.

### (Cu and Sn: 0.1% or less)

Copper (Cu) may play a role of improving the texture by being partially dissolved within a grain, and if a content of Cu and Sn is excessive, Cu and Sn may be controlled so that the content of Cu and Sn is 0.1% or less because Cu and Sn are segregated in a grain boundary to form a liquid phase at a high temperature.

### (Total of rare earth element and other impurity: 0.2% or less)

The grain-oriented electrical steel sheet according to an embodiment of the present disclosure may include the rare earth element such as cerium (Ce) or praseodymium (Pr) and the other impurity, and a total amount of the rare earth element and the impurity may be 0.2% or less. The rare earth element and the impurity may refer to an impurity that is intentionally introduced or inevitably mixed in steelmaking and a manufacturing process of the grain-oriented electrical steel sheet. Because the inevitable impurity is widely known, a detailed description thereof is omitted. An embodiment of the present disclosure does not exclude addition of an element in addition to the above-described alloy component, and may be variously included within a range that does not impair the technical idea of the present disclosure. **If** the additional element is included, the additional element may replace the balance of iron (Fe).

Next, the slab may be manufactured by a continuous casting method, the manufactured slab may be heated by a usual method to be hot-rolled, and hot-rolled sheet annealing may be performed on the hot-rolled slab selectively as necessary to be cold-rolled so that the steel sheet having the above composition is manufactured in a thickness range of 0.1 to 0.5 mm. **The** cold rolling may be performed by one cold rolling or two or more cold rollings with intermediate annealing interposed therebetween.

### [primary recrystallization annealing]

**The** primary recrystallization annealing may be performed on the cold-rolled steel sheet described above through a simultaneous decarbonitriding or post-decarbonization nitrification process. **In** the primary recrystallization annealing by simultaneous decarbonitriding, a structure of the cold rolling deformed during the annealing process may include recrystallization so that decarbonization annealing is performed on the structure of the cold rolling. **To** this end, the primary recrystallization annealing may be performed in a mixed gas atmosphere in which nitrogen, hydrogen, and water are mixed. In the nitriding after decarbonization, a nitrification treatment in which a nitrogen ion is introduced into the steel sheet may be performed using an ammonia gas after decarbonization.

If the simultaneous decarbonitriding is performed, in the primary recrystallization annealing for the cold-rolled steel sheet loaded into a furnace, a dew point temperature of an atmospheric gas may be set to 40 to 70°C in a 700 to 900°C section and a Fe₂SiO₄/SiO₂ ratio of a surface thereof may be controlled to 0.5 to 3.0 to form an oxide layer on a surface of the electric steel sheet.

### [secondary recrystallization annealing]

Then, an annealing separation agent based on MgO may be applied to a surface of the electrical steel sheet and then a temperature may be raised to 1,000°C or higher to cause secondary recrystallization by long-term crack annealing so that it forms a texture of a Goss orientation in which a {110} surface of the steel sheet is parallel to a rolling surface and a <001> direction is parallel to a rolling direction. Through the final high-temperature annealing process, a glass film layer including forsterite may be formed on a surface of the steel sheet and the secondary recrystallization may be formed inside the steel sheet.

### [formation of insulating film]

A steel sheet on which the secondary recrystallization occurs may be coated with a single or composite insulating coating liquid of colloidal silica and metal phosphate and then may be annealed to form an insulating film layer on a surface of the electric steel sheet on which the glass film layer is formed.

A method for forming the insulating film layer may be used without particular limitation, and for example, the insulating film layer may be formed by applying an insulating coating liquid including phosphate. A coating liquid including colloidal silica and metal phosphate may be used as the insulating coating liquid. In this case, the metal phosphate may be Al phosphate, Mg phosphate, or a combination thereof, and a content of Al, Mg, or a combination thereof compared with a weight of the insulating coating liquid may be 15 wt% or more.

### [refinement treatment of magnetic domain]

Because a method for refining the magnetic domain has been described above, a detailed description thereof is omitted.

Hereinafter, the present disclosure will be described in more detail through a specific embodiment. However, the embodiment is only intended to illustrate the present disclosure, and the present disclosure is not limited thereto.

### Experimental Example 1

Cold-rolled steel sheets with thicknesses of 0.20 mm and 0.23 mm are manufactured using a slab having a composition shown in Table 1 below and hot-rolled and cold-rolled. In Table 1, an element % may mean weight %.

**(Table 1)**

| C (%) | Si (%) | Mn (%) | Cr (%) | Sn (%) | Sb (%) | Al (%) | Balance |
|---|---|---|---|---|---|---|---|
| 0.05 | 3.518 | 0.103 | 0.113 | 0.0699 | 0.019 | 0.003 | Fe |

The cold-rolled steel sheet is maintained at a temperature of 840°C in a humid atmosphere of a mixed gas of hydrogen, nitrogen, and ammonia for 150 seconds, a dew point temperature of the humid atmosphere may be 69°C and a Fe₂SiO₄/SiO₂ ratio of a surface thereof may be controlled to 1.2, and decarbonization annealing including primary recrystallization annealing and nitriding treatment are performed on the cold-rolled steel sheet.

An annealing separation agent including MgO is applied to a surface of the steel sheet in which primary recrystallization treatment is performed to be finally annealed at a high temperature. In this case, the final high-temperature annealing is performed in a mixed atmosphere of 25 volume% nitrogen and 75 volume% hydrogen up to 1,150°C, and after a temperature reaches 1,150°C, the steel sheet is maintained in a 100 volume% hydrogen atmosphere for approximately 8 hours and then is cooled in the furnace.

A coating solution mixed with a colloidal silica nanoparticle and metal phosphate is applied to a surface of the steel sheet in which the secondary recrystallization annealing is completed by the final high-temperature annealing process and is heat-treated at a temperature of 870°C for 55 seconds to form an insulating coating layer for the grain-oriented electrical steel sheet.

Next, the laser listed in Table 2 below is irradiated. In this case, both the first laser and the second laser have an elliptical beam shape with a beam width/length ratio (e.g., a beam width/a beam length) of 0.55. The diode laser has a wavelength of 1.03 µm, the optical fiber laser has a wavelength of 1.08 µm, and the CO₂ laser has a wavelength of 10.6 µm. A beam width of each laser is all unified to 200 µm. An instantaneous movement speed of the steel sheet in the laser irradiation portion is 2.3 m/s, a length of the deformation portion is 160 mm, and for irradiation of the laser, a scan speed thereof is set to 60 m/s and an irradiation interval thereof is set to 5.0 mm.

In Comparative Example 3, the second laser is irradiated by providing an interval of 4 seconds after irradiation of the first laser.

A coercive force is measured as an applied magnetic field value required to make a value of a magnetic flux density value 0 under an alternating magnetic field measured by a single sheet tester (SST).

In corrosion resistance, sodium chloride is dissolved in deionized water according to KS D 9502 and is adjusted to a salt concentration of 5±0.5%. Thus, after a 35°C salt solution is sprayed to a specimen for a certain period of time, the specimen is taken out after the salt water is sprayed for the time to be washed with water at a room temperature and then be dried so that presence or absence of rust on a surface thereof is checked. In the salt spray test, if rust by a laser does not occur under a salt spray condition of 8 hours, the corrosion resistance is classified as good (⊚), if rust by a laser does not occur under a salt spray condition of 7 hours, the corrosion resistance is classified as average (○), and if rust by a laser occurs under a salt spray condition of 4 hours, the corrosion resistance is classified as inferior (Δ).

**(Table 2)**

| | First laser | | Second laser | | Overlapping ratio | Presence of molten solidifica tion layer | Before irradiati on | After irradiati on | Corrosion resista nce |
|---|---|---|---|---|---|---|---|---|---|
| | Typ e | Outp ut (W) | Typ e | Outp ut (W) | | | Coerci ve force (A/m) | Coerci ve force (A/m) | |
| Embodim ent 1 | Dio de | 1000 | Dio de | 400 | 10% | O | 17.4 | 15.8 | ⊚ |
| Embodim ent 2 | Dio de | 1000 | Dio de | 400 | 100% | O | 17.3 | 15.4 | ⊚ |
| Embodim ent 3 | CO₂ | 1500 | Fibe r | 400 | 10% | O | 17.3 | 16.0 | ⊚ |
| Embodim ent 4 | CO₂ | 1500 | Fibe r | 400 | 100% | O | 17.4 | 15.5 | ⊚ |
| Compara tive Example 1 | CO₂ | 1500 | - | - | - | X | 17.3 | 16.5 | ○ |
| Compara tive Example 2 | Dio de | 400 | - | - | - | X | 17.3 | 17.0 | ○ |
| Compara tive Example 3 | CO₂ | 1500 | Dio de | 400 | 100% | X | 17.3 | 16.6 | △ |

As shown in Table 2, if the first laser and the second laser are overlapped and irradiated, it may be confirmed that the molten solidification layer is generated and improvement in the iron loss and improvement in the corrosion resistance are achieved. However, if a single laser is used or a laser is irradiated over a long period of time, appropriate iron loss improvement and appropriate corrosion resistance improvement may not be obtained.

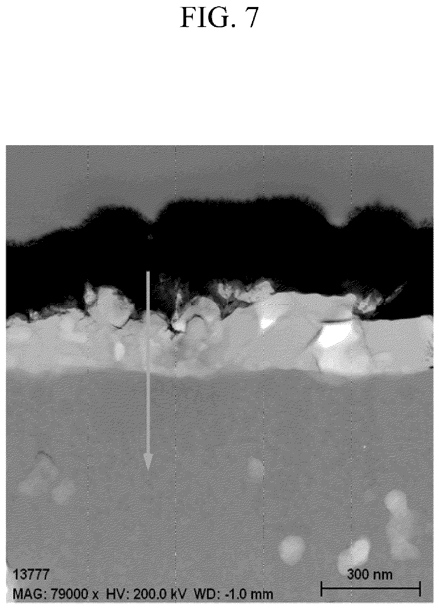

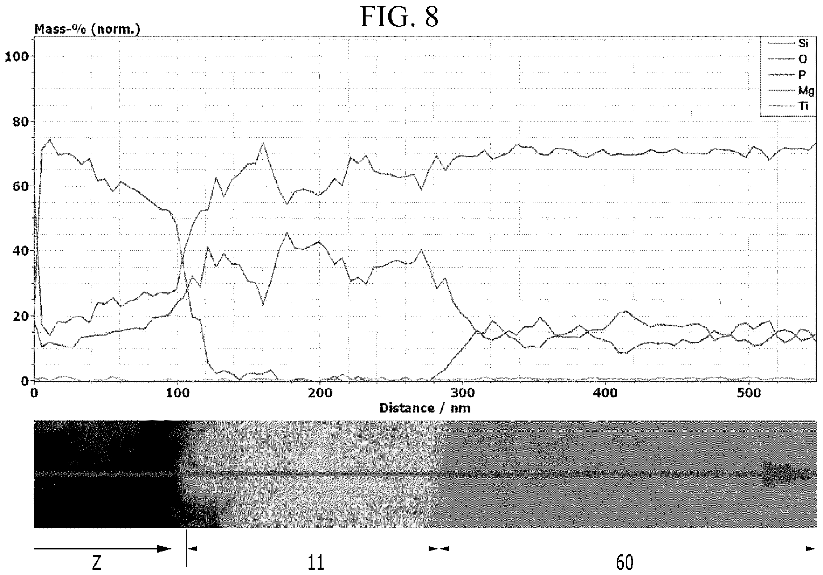

FIG. 7 is a photograph analyzing the molten solidification layer of the steel sheet manufactured in Embodiment 1. As shown in Fig. 7, it may be confirmed that the molten solidification layer with a width of about 300 nm is formed. As shown in Fig. 8, it may be confirmed that a thickness of the molten solidification layer is approximately 200 nm. FIG. 7 is a photograph of the molten solidification layer analyzed using a focused ion beam (FIB)-transmission electron microscopy (TEM) in Embodiment 1. An acceleration voltage is applied to an FIB source to generate an ion and an electric field is used to selectively inject the ion into an area to be observed so that a desired portion of a specimen is processed and observed using TEM.

### Experimental Example 2

Experimental Example 2 is performed in the same manner as Experimental Example 1, but an irradiation interval and a scan speed of the laser are changed as shown in Table 3 below. An overlapping ratio of Embodiment 5 to 7 is set to 100%. In Comparative Example 6, the second laser is irradiated by giving an interval of 4 seconds after irradiation of the first laser.

**(Table 3)**

| | First laser | | Second laser | | Irradiation interval (mm) | Scan speed (m/s) | Presence of molten solidification layer | Before irradiation | After irradiation |
|---|---|---|---|---|---|---|---|---|---|
| | Type | Output (W) | Type | Output (W) | | | | W17/50 (W/kg) | W17/50 (W/kg) |
| Embodiment 5 | CO₂ | 1500 | Diode | 400 | 3.0 | 124 | O | 0.82 | 0.71 |
| Embodiment 6 | CO₂ | 1500 | Diode | 400 | 5.0 | 75 | O | 0.82 | 0.70 |
| Embodiment 7 | CO₂ | 1500 | Diode | 400 | 7.0 | 53 | O | 0.82 | 0.71 |
| Comparative Example 4 | Diode | 400 | - | - | 5.0 | 75 | X | 0.82 | 0.80 |
| Comparative Example 5 | CO₂ | 1500 | - | - | 5.0 | 75 | X | 0.82 | 0.78 |
| Comparative Example 6 | CO₂ | 1500 | Diode | 400 | 5.0 | 75 | X | 0.81 | 0.78 |

As shown in Table 3, if the first laser and the second laser are overlapped and irradiated, it may be confirmed that the molten solidification layer is generated and improvement in the iron loss and improvement in the corrosion resistance are achieved. However, if a single laser is used or a laser is irradiated over a long period of time, appropriate iron loss improvement and appropriate corrosion resistance improvement may not be obtained.

The present disclosure is not limited to the embodiments, may be manufactured in various different forms, and a person of ordinary skill in the art to which the present disclosure belongs will be able to understand that the present disclosure may be implemented in other specific forms without changing the technical idea or essential feature of the present disclosure. Therefore, it should be understood that the embodiments described above are illustrative and not limited in all respects.

**<Description of symbols>**

| | | | |
|---|---|---|---|
| 100: | grain-oriented electrical steel sheet | 10: | deformation portion |
| 11: | molten solidification layer | 20: | laser beam spot |
| 21: | first laser beam | 22: | second laser beam |
| 23: | overlapping irradiation boundary portion | 30: | overlapping lasers |
| 40: | steel sheet surface | 50: | steel sheet substrate |
| 60: | insulating film layer | | |

## Claims

1. A grain-oriented electrical steel sheet, comprising:
an electrical steel sheet substrate; and
an insulating film layer that is disposed on the electrical steel sheet substrate,
wherein a deformation portion with a linear shape exists on a surface of the insulating film layer, an overlapping irradiation boundary portion exists within the deformation portion, a molten solidification layer exists at a lower portion of the overlapping irradiation boundary portion, and the molten solidification layer includes 10% by weight or less of P.

2. The grain-oriented electrical steel sheet of claim 1, wherein a width of the deformation portion of the molten solidification layer in a direction perpendicular to a length direction of the deformation portion is 0.05 to 10 µm.

3. The grain-oriented electrical steel sheet of claim 1, wherein a thickness of the molten solidification layer is 20% or less of a thickness of the insulating film layer.

4. The grain-oriented electrical steel sheet of claim 1, wherein the insulating film layer below the deformation portion excluding the overlapping irradiation boundary portion has a content of P of 10 to 20 wt% in a range of 100 nm in a thickness direction of the steel sheet from a surface of the insulating film layer.

5. The grain-oriented electrical steel sheet of claim 1, wherein a thickness of the insulating film layer below the deformation portion is 60 to 90% of a thickness of the insulating film layer where the deformed portion is not formed.

6. The grain-oriented electrical steel sheet of claim 1, wherein a metal oxide layer is interposed between the electrical steel sheet substrate and the insulating film layer.

7. A method for refining a magnetic domain of a grain-oriented electrical steel sheet, comprising:
irradiating a first laser beam having a first wavelength; and
irradiating a second laser beam having a second wavelength,
wherein a first beam spot of the first laser beam and a second beam spot of the second laser beam overlap by 10% or more.

8. The method of claim 7, wherein each of the first laser beam and the second laser beam is selected from a CO₂ laser, an optical fiber laser, a YAG laser, a ruby laser, a sapphire laser, a disk laser, a diode laser, or a UV laser.

9. The method of claim 7, wherein an output of each of the first laser beam and the second laser beam is 10 to 2000 W.

10. The method of claim 7, wherein the first laser beam and the second laser beam have different wavelengths.

11. The method of claim 7, wherein an interval between a time at which the first laser beam is irradiated and a time at which the second laser beam is irradiated is 16 ms or less at a position in which the first beam spot of the first laser beam and the second beam spot of the second laser beam overlap.
